# EUROPÄISCHE PATENTSCHRIFT

(11) **EP 3 771 600 B1**
(45) Veröffentlichungstag und Bekanntmachung des Hinweises auf die Patenterteilung: **02.03.2022**
(21) Anmeldenummer: 20188479.8
(22) Anmeldetag: 29.07.2020
(51) Int. Cl.: B60S 9/08, G05G 1/08

(54) **HANDKURBEL FÜR EINE STÜTZWINDE**
CRANK HANDLE FOR A SUPPORT JACK
MANIVELLE POUR UNE BÉQUILLE

(30) Priorität: 31.07.2019 DE 102019005385
(43) Veröffentlichungstag der Anmeldung: 03.02.2021
(73) Patentinhaber: JOST-Werke Deutschland GmbH, 63263 Neu-Isenburg (DE)
(72) Erfinder: ALGÜERA GALLEGO, José Manuel, 63739 Aschaffenburg (DE)
(74) Vertreter: Straubel, Dirk

(56) Entgegenhaltungen:
- CN-U- 203 730 598
- DE-U1- 7 605 307
- DE-U1-202008 005 202

## Beschreibung

Die Erfindung betrifft eine Handkurbel für eine Stützwinde gemäß den im

Oberbegriff des Anspruchs 1 stehenden Merkmalen. Die DE 20 2008 005202 U1 offenbart eine solche Handkurbel. Darüber hinaus ist die Erfindung auch an einer Stützwinde verwirklicht.

Stützwinden sind häufig paarweise an Sattelaufliegern montiert und halten diese nach dem Separieren von einem Zugfahrzeug in einer konstanten Höhenlage. Für diesen Zweck sind die Stützwinden telekopierbar und werden üblicherweise mit einer Handkurbel zwischen einer eingefahrenen und einer ausgefahrenen Position verstellt. Dabei steht der Bediener seitlich am Sattelauflieger und dreht die Handkurbel in oder entgegen dem Uhrzeigersinn, um den Auflieger anzuheben oder abzusenken. Aus Sicherheitsgründen soll der Bediener einen sicheren Stand haben und die Handkurbel mit beiden Händen an einer Kurbelhülse betätigen, ohne diese loszulassen, bis der vorgesehene Ausfahrzustand der Stützwinde(n) erreicht ist.

Die DE 76 05 307 U offenbart eine entsprechende Handkurbel mit einem Hauptkörper, an dessen ersten Ende ein Verbindungselement in Form eines Gabelstückes ausgebildet ist, welches dauerhaft mittels eines Bolzens an der Eingangswelle einer Stützwinde befestigt ist. Bei Nichtbenutzung kann die Handkurbel bezüglich der Eingangswelle weggekippt und in einen Kurbelhalter eingehängt werden. Durch Betätigung einer federvorgespannten Lasche und Verschiebung der Kurbel bezüglich der Antriebswelle lässt sich die Kurbel in einer Gebrauchsstellung festsetzen. Gelegentlich kommt es jedoch vor, dass der Bediener entgegen der Sicherheitshinweise insbesondere beim Absenken des Aufliegers mit nur einer Hand die Handkurbel in eine schnelle Drehbewegung versetzt und die Handkurbel loslässt, so dass diese einige Umdrehungen aus dem Drehimpuls heraus ausführt. Hierdurch kann sich der Auflieger während der Phase, in der die Handkurbel nicht vom Bediener gehalten ist, unkontrolliert absenken. Darüber hinaus besteht für den Bediener ein Risiko, von der schnell rotierenden Handkurbel getroffen und verletzt zu werden.

Der Erfindung lag daher die Aufgabe zugrunde, eine Handkurbel bereitzustellen, die eine Übertragung eines Drehmomentes von der Handkurbel auf die Eingangswelle nur dann zulässt, wenn der Bediener die Handkurbel mit zumindest einer Hand festhält.

Die Erfindung wird mit den Merkmalen des Anspruchs 1 gelöst. Mit dem Verbindungelement ist die Handkurbel an der Eingangswelle einer Stützwinde befestigbar. Das Verbindungselement sorgt für einen bezüglich der Eingangswelle schwenkbaren und dauerhaften, mechanischen Zusammenhalt von Handkurbel und Eingangswelle.

An dem zweiten Ende des Hauptkörpers ist vorzugsweise eine in ihrer Umfangsrichtung drehbar gelagerte Kurbelhülse angeordnet, an welcher der Bediener die Handkurbel ergreift und in Drehung versetzt. Alternativ zu einer Kurbelhülse kann das zweite Ende auch mit einer glatten Oberfläche ausgebildet sein, die bei Betätigung der Handkurbel reibungsarm über die Handinnenfläche des Bedieners gleitet.

Typischerweise sind das erste und zweite Ende des Hauptkörpers achsparallel zueinander ausgerichtet. Ein zwischen dem ersten und zweiten Ende angeordneter Mittelteil des Hauptkörpers verläuft im Wesentlichen senkrecht zu dem ersten und zweiten Ende des Hauptkörpers. Das Verbindungsmittel greift an dem ersten Ende des Hauptköpers an und ist je nach Schaltstellung einer an dem ersten Ende angeordneten Kupplung entweder drehfest oder drehbar mit dem ersten Ende verbunden. Bei einer Betätigung der Handkurbel rotiert das zweite Ende im Abstand des Mittelteils um das erste Ende.

Die Kupplung ist über ein Kraftübertragungsmittel mit dem am zweiten Ende des Hauptkörpers angeordneten Stellelement verbunden, so dass ein Bediener das Ausfahren der Stützwinde nur bewerkstelligen kann, wenn er während einer Drehbewegung der Handkurbel, vorzugsweise mittels der Kurbelhülse, gleichzeitig das Stellelement bedient. Das Stellelement initiiert bei Betätigung ein Schließen der Kupplung in eine kraftschlüssige Verbindungsposition. Die kraftschlüssige Verbindungsposition kann durch einen Formschluss oder einen Reibschluss der Kupplung realisiert sein. Hieraus resultiert zunächst der Vorteil, dass eine Drehung der Eingangswelle und somit ein Verfahren der Stützwinde(n) nur erfolgt, wenn die Handkurbel während der Betätigung weiterhin in der Hand der Bedienperson verbleibt. Das Aufbringen eines Drehimpulses ohne Festhalten der Handkurbel könnte zwar weiterhin erfolgen, führt aber nicht zu einem Verfahren der Stützwinde(n), da auf deren Eingangswelle aufgrund der dann geöffneten Kupplung kein Drehmomentes übertragen wird. Infolgedessen wird es der Bediener unterlassen, die Handkurbel überhaupt mit einem Drehimpuls zu beschleunigen und anschließend loszulassen, so dass auch das Risiko sinkt, von einer unkontrolliert um die Eingangswelle taumelnden Handkurbel getroffen zu werden.

Vorzugsweise sind die Kupplung und das Stellelement über ein Kraftübertragungsmittel miteinander verbunden. Das Kraftübertragungsmittel kann ein Zugkraftelement, insbesondere ein Seil, einen Bowdenzug oder eine Kette, oder ein Druckkraftelement, insbesondere einen Druckzug, eine Druckkette oder einen Hydraulikübertrager, sein. Unter einem Bowdenzug wird ein bewegliches Maschinenelement zur Übertragung einer mechanischen Bewegung sowie von Druck- und Zugkräften mittels einer biegsamen Kombination aus einem Drahtseil und einer in Verlaufsrichtung druckfesten Hülle verstanden.

Vorteilhafterweise weist die Kupplung eine Ausrückstange auf, an welcher das Kraftübertragungsmittel befestigt ist. Mit Hilfe des Kraftübertragungsmittels ist die Ausrückstange gegenüber dem ersten Ende verfahrbar, insbesondere in dessen axialer Richtung. Je nach dem, ob die Ausrückstange durch eine Bewegung in axialer Richtung in eine drehfeste oder eine drehbare Verbindungsposition mit dem ersten Ende gelangt, befindet sich die Kupplung in einer geöffneten Trennposition oder einer kraftschlüssigen Verbindungsposition.

Gemäß einer besonders günstigen Ausführungsform greift die Ausrückstange drehfest an dem Verbindungselement an und ist mit einem Drehmomentaufnahmeabschnitt ausgebildet. Der Drehmomentaufnahmeabschnitt kann ein im Querschnitt mehrkantiges oder ovales Profil aufweisen welches eine formschlüssige Drehmomentübertragung mit dem Hauptkörper erlaubt. Alternativ kann auch ein elastisches oder angerautes Element für eine reibschlüssige Drehmomentübertragung vorhanden sein.

Es hat sich als besonders sinnvoll herausgestellt, wenn die Kupplung einen Drehmomentübertragungsbereich aufweist, der ortsfest an dem ersten Ende des Hauptkörpers angeordnet ist. Der Drehmomentübertragungsbereich ist komplementär zu dem Drehmomentaufnahmeabschnitt ausgebildet, so dass bei Betätigung der Kupplung mittels des Stellelementes und Kraftübertragungsmittels der Drehmomentaufnahmeabschnitt und der Drehmomentübertragungsbereich ineinandergreifen. Vorzugsweise ist der Drehmomentaufnahmeabschnitt auf der Innenseite des Hauptkörpers ausgebildet oder aus einer abschnittsweisen Verformung des Hauptkörpers im Bereich des ersten Endes gebildet.

Zweckmäßigerweise ist die Ausrückstange bezüglich des Hauptkörpers in axialer Richtung verschiebbar geführt und bei Betätigung des Stellelementes gelangt der Drehmomentaufnahmeabschnitt in Wirkeingriff mit dem Drehmomentübertragungsbereich. In einer offenen Trennposition der Kupplung ist der Drehmomentaufnahmeabschnitt kontaktlos zu dem ersten Ende des Hauptkörpers angeordnet. Durch Betätigung des Stellelementes wandert der Drehmomentaufnahmeabschnitt in axialer Richtung und gelangt in Wirkeingriff mit dem Drehmomentübertragungsbereich, so dass sich die Kupplung in einer kraftschlüssigen Verbindungsposition befindet. Der Drehmomentaufnahmeabschnitt ist in der kraftschlüssigen Verbindungsposition der Kupplung insbesondere in radialer Richtung von dem Drehmomentübertragungsbereich konzentrisch umgeben.

Der Drehmomentübertragungsbereich kann einen komplementär zu dem Drehmomentaufnahmeabschnitt ausgeformten Querschnitt aufweisen. Hierdurch kann der Drehmomentaufnahmeabschnitt in einer kraftschlüssigen Verbindungsposition der Kupplung von dem Drehmomentübertragungsbereich aufgenommen sein.

Die Kupplung kann beispielsweise von einem Federelement in einer geöffneten Trennposition gehalten sein.

Vorzugsweise ist der Hauptkörper ein Rohr, in dessen Innenraum die Kupplung und/oder das Federelement angeordnet ist/sind. Hieraus resultiert der Vorteil, dass insbesondere im Bereich des ersten Endes keine Bauteile aus dem Hauptkörper herausstehen. Durch den Innenraum kann außerdem das Kraftübertragungsmittel in axialer Richtung von dem ersten Ende bis zu dem zweiten Ende verlaufen. Unter einem Rohr wird ein länglicher Hohlkörper verstanden, dessen Länge in der Regel wesentlich größer als sein Durchmesser ist. Das Rohr ist aus einem unter den zu erwartenden betrieblichen Lasten biegesteifen Material gefertigt und kann einen kreisrunden Querschnitt aufweisen, welcher für die gebräuchlichsten Anwendungsfälle die optimale Bauform darstellt. Eine erhöhte Steifigkeit lässt sich auch mit rechteckigen, ovalen und anderen Querschnitten erzielen. Der Hauptkörpers ist regelmäßig als einstückig integraler Rohrkörper ausgebildet.

Gemäß einer ersten vorteilhaften Ausgestaltung ist das Federelement ein an dem ersten Ende angeordnetes Druckfederelement oder Zugfederelement. Bei einem Druckfederelement ist die Rückstellkraft des Federelementes eine Druckkraft und bei einem Zugfederelement eine Zugkraft.

Günstigerweise ist das Druckfederelement oder das Zugfederelement mit einem Endabschnitt ortsfest bezüglich der Ausrückstange und einem gegenüberliegenden Endabschnitt ortsfest bezüglich des ersten Endes des Hauptkörpers gehalten.

Gemäß einer zweiten, alternativen Ausgestaltung kann das Federelement ein an dem zweiten Ende des Hauptkörpers angeordnetes Zugfederelement sein.

Zweckmäßigerweise ist das Zugfederelement mit einem Endabschnitt an dem Stellelement und mit einem gegenüberliegenden Endabschnitt ortsfest an dem zweiten Ende des Hauptkörpers festgelegt.

Sinnvollerweise ist das Stellelement bezüglich des zweiten Endes des Hauptkörpers, insbesondere in axialer Verlängerung des zweiten Endes, verschiebbar gelagert. Hierdurch lässt sich das Stellelement während des Drehens der Kurbelhülse gleichzeitig bedienen und rotiert um das zweite Ende des Hauptkörpers, so dass der Bediener an der Handkurbel nicht umzugreifen braucht und die Handkurbel das Stellelement während des Drehens nicht überstreift.

Eine besonders vorteilhafte Ausgestaltung lässt sich erzielen, wenn das Stellelement einen Anschlagpunkt für das Kraftübertragungsmittel aufweist. Eine Betätigung des Stellelementes führt dadurch unmittelbar zu einer Verstellung des Anschlagpunktes des Kraftübertragungsmittels und somit zu einer Veränderung der Schaltstellung der Kupplung. Vorzugsweise ist der Anschlagpunkt in der geöffneten Trennposition der Kupplung in einer nahen Position zu dem zweiten Ende des Hauptkörpers angeordnet. In der kraftschlüssigen Verbindungsposition der Kupplung kann der Anschlagpunkt in einer beabstandeten Position zu dem zweiten Ende des Hauptkörpers angeordnet sein.

Günstigerweise umfasst der Anschlagpunkt eine Justiervorrichtung zur Längeneinstellung des Kraftübertragungsmittels. Die Justiervorrichtung dient insbesondere dazu, die Länge des Kraftübertragungsmittels und hierdurch den Punkt einer kraftschlüssigen Verbindungsposition der Kupplung einzustellen. Dieses ist beispielsweise sinnvoll, um Toleranzen der einzelnen Bauteile auszugleichen sowie verschleißbedingte Längenänderungen des Kraftübertragungsmittels zu kompensieren.

Besonders bevorzugt ist eine Ausführungsform, bei der das Stellelement eine Stellhülse ist, die in axialer Richtung das zweite Ende des Hauptkörpers zumindest teilweise überlappt. In dem überlappenden Bereich ist die Stellhülse radial von dem zweiten Ende gehalten. Die Stellhülse kann zum Schalten der Kupplung in eine kraftschlüssige Verbindungsposition bezüglich des zweiten Endes in axialer Richtung verschiebbar geführt sein.

Die Stellhülse sollte zumindest teilweise von der Kurbelhülse überragt sein. Bei dieser Ausführungsform ist die Stellhülse in radialer Richtung zwischen dem zweiten Ende und der Kurbelhülse angeordnet.

Vorteilhafterweise ist die Stellhülse drehbeweglich bezüglich der Kurbelhülse und des zweiten Endes des Hauptkörpers gelagert. Die Stellhülse ist hierdurch von der Drehbewegung der Kurbelhülse entkoppelt und dreht frei bezüglich des zweiten Endes des Hauptkörpers. Dieses hat den Vorteil, dass die Stellhülse von einer zweiten Hand des Bedieners komfortabel gehalten werden kann, ohne in der Handfläche weiterzudrehen.

Gemäß einer weiteren Ausgestaltung kann an dem Stellelement oder der Kurbelhülse ein Hebel schwenkbeweglich gelagert sein, dessen Lastarm an dem zweiten Ende des Hauptkörpers abgestützt ist. Der Hebel vereinfacht eine axiale Verstellung des Stellelementes in axialer Richtung des zweiten Endes des Hauptkörpers.

Zweckmäßigerweise greift das Federelement an dem Stellelement oder der Kurbelhülse und dem Hebel an. Hierdurch wird der Hebel in eine bezüglich des Stellelementes oder der Kurbelhülse abstehende Position gezogen und kann von einem Bediener ergriffen werden. Sinnvollerweise ist die Kurbelhülse derart an dem zweiten Ende des Hauptkörpers gelagert, dass Axialkräfte übertragbar sind. Dieses ist insbesondere notwendig, wenn der Bediener den Hebel betätigt und das Stellelement aufgrund der Hebelwirkung des Hebels in eine bezüglich des zweiten Endes ausgerückte Position gewandert ist.

Ein axialer Verfahrweg des Stellelementes kann vorzugsweise einem axialen Verfahrweg der Ausrückstange und/oder einem axialen Verfahrweg des Verbindungselementes entsprechen.

Die Erfindung betrifft auch eine Stützwinde mit einer Eingangswelle und einer vorstehend beschriebenen Handkurbel, wobei die Stützwinde eine Außenhülse und eine darin teleskopierbar geführte Innenhülse mit einem Endseitig daran ausgebildeten Stützfuß aufweist und durch Betätigung der Handkurbel in kraftschlüssiger Verbindungsposition der Kupplung die Innenhülse relativ zu der Außenhülse verfahrbar ist.

Zum besseren Verständnis wird die Erfindung nachfolgend anhand von 10 Figuren näher erläutert. Es zeigen die
- **Fig. 1:**: eine perspektivische Ansicht auf zwei Stützwinden mit einer Handkurbel;
- **Fig. 2:**: eine Querschnittsansicht durch ein erstes Ende eines Hauptkörpers der Handkurbel gemäß einer ersten Ausführungsform in geöffneter Trennposition der Kupplung;
- **Fig. 3:**: eine Querschnittsansicht durch ein erstes Ende eines Hauptkörpers der Handkurbel gemäß der Ausführungsform in Fig. 2 in kraftschlüssiger Verbindungsposition der Kupplung;
- **Fig. 4:**: eine Querschnittsansicht durch ein erstes Ende eines Hauptkörpers der Handkurbel gemäß einer zweiten Ausführungsform in kraftschlüssiger Verbindungsposition der Kupplung;
- **Fig. 5:**: eine Querschnittsansicht durch ein erstes Ende eines Hauptkörpers der Handkurbel gemäß einer dritten Ausführungsform in kraftschlüssiger Verbindungsposition der Kupplung;
- **Fig. 6:**: eine Querschnittsansicht durch ein zweites Ende eines Hauptkörpers der Handkurbel gemäß einer vierten Ausführungsform bei geöffneter Trennposition der Kupplung;
- **Fig. 7:**: eine Querschnittsansicht durch ein zweites Ende eines Hauptkörpers der Handkurbel gemäß der Ausführungsform in Fig. 6 bei kraftschlüssiger Verbindungsposition der Kupplung;
- **Fig. 8:**: eine Querschnittsansicht durch ein zweites Ende eines Hauptkörpers der Handkurbel gemäß einer fünften Ausführungsform bei geöffneter Trennposition der Kupplung;
- **Fig. 9:**: eine Querschnittsansicht durch ein zweites Ende eines Hauptkörpers der Handkurbel gemäß einer sechsten Ausführungsform bei geöffneter Trennposition der Kupplung und
- **Fig. 10:**: eine Querschnittsansicht durch ein zweites Ende eines Hauptkörpers der Handkurbel gemäß der Ausführungsform in Fig. 9 bei kraftschlüssiger Verbindungsposition der Kupplung.

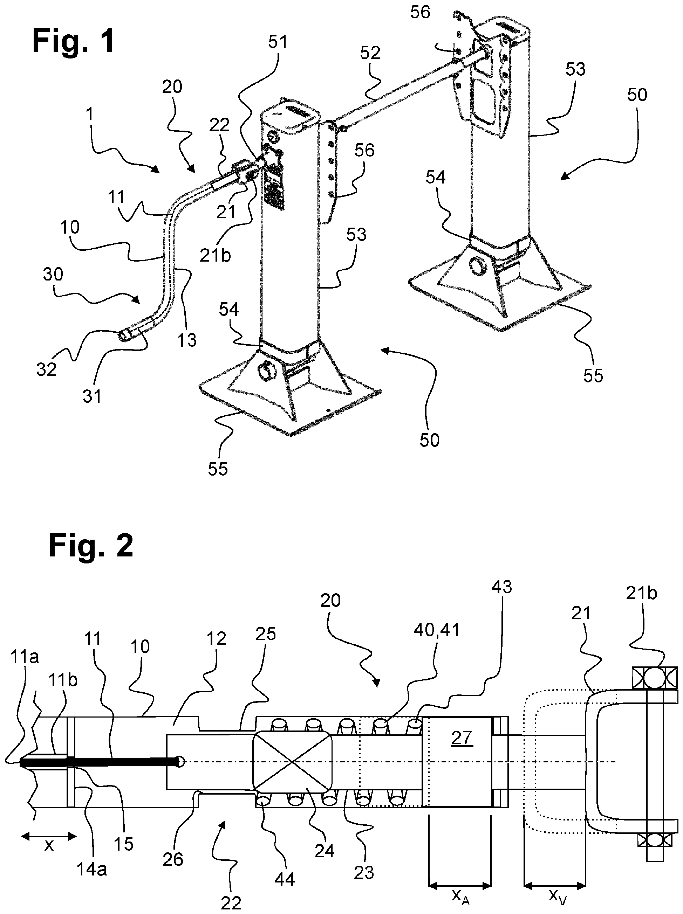

Die Fig. 1 zeigt in einer perspektivischen Ansicht zwei Stützwinden 50, die jeweils eine Außenhülse 53 mit einem Vierkantprofil und eine darin verschiebbar geführte Innenhülse 54 mit gleicher Profilform aufweisen. Die Außenhülsen 53 weisen in ihrem oberen Abschnitt jeweils eine Anschraubplatte 56 auf, mit welcher die Stützwinden 50 an einem Fahrzeug, insbesondere an einem Sattelauflieger (nicht gezeigt) befestigt sind.

Zur Einstellung des Ausfahrzustandes der Innenhülse 54 bezüglich der zugehörigen, ortsfest an dem Fahrzeug angebrachten Außenhülse 53 ragt aus der in der Bildebene vorderen Stützwinde 50 eine Eingangswelle 51 heraus, die mit einer Handkurbel 1 drehfest verbunden ist. Die Eingangswelle 51 ist kinematisch mit einer zwischen den beiden Stützwinden 50 verlaufenden Verbindungswelle 52 gekoppelt, so dass durch eine Rotation der Handkurbel 1 im oder entgegen dem Uhrzeigersinn die Innenhülsen 53 beider Stützwinden 50 ein- oder ausgefahren werden. Das Ausfahren der Innenhülse 54 erfolgt solange, bis die an freien Enden der Innenhülsen 54 angeordneten

Stützfüße 55 auf dem Boden stehen und die in Normalkraftrichtung wirkende Last des Fahrzeugs aufnehmen. Nach dem Ankuppeln des Anhängers werden die Innenhülsen 54 solange eingefahren, bis diese entsprechend der Darstellung in Fig. 1 annähernd vollständig von ihrer zugehöriger Außenhülse 53 aufgenommen sind.

Die Handkurbel 1 weist einen Hauptkörper 10 mit einer im Wesentlichen Z-Form auf. Ein erstes Ende 20 des Hauptkörpers 10 ist der Eingangswelle 51 zugewandt und trägt ein als Gabelstück ausgebildetes Verbindungselement 21, welches an zwei gegenüberliegenden Seiten die Eingangswelle 51 überragt und mittels eines Verbindungsbolzens 21b die Eingangswelle 51 durchsetzt.

Ein zweites Ende 30 des Hauptkörpers 10 ist achsparallel zu dem ersten Ende 20 ausgerichtet und trägt eine drehbar darauf gelagerte Kurbelhülse 31. Die Kurbelhülse 31 wird von dem Bediener zum Verfahren des Ausfahrzustandes der Stützwinden 50 ergriffen und darüber die Handkurbel 1 in Rotation um die Eingangswelle 51 versetzt. Zwischen dem ersten Ende 20 und dem zweiten Ende 30 verläuft ein Mittelteil 13 des Hauptkörpers 10, dessen axiale Erstreckung im Wesentlichen senkrecht zu der axialen Erstreckung des ersten und zweiten Endes 20, 30 verläuft.

An dem zweiten Ende 30 ist außerdem unmittelbar benachbart zu der Kurbelhülse 31 ein Stellelement 32 angeordnet, mit welchem eine an dem ersten Ende 20 befindliche Kupplung 22 bedienbar ist. Das Stellelement 32 ist insbesondere in axialer Verlängerung der Kurbelhülse 31 angebaut und kann für eine Betätigung von der kurbelnden Hand ergriffen werden. Das Stellelement 32 ist mittels eines Kraftübertragungsmittels 11 mit der am ersten Ende 20 angeordneten Kupplung 22 verbunden. Das Kraftübertragungsmittel 11 verläuft über seine gesamte axiale Länge innerhalb des Hauptkörpers 10 und ist in der Fig. 1 als punktierte Linie angedeutet.

In der Fig. 2 ist ein Querschnitt des ersten Endes 20 des Hauptkörpers 10 mit der darin verbauten Kupplung 22 dargestellt. Der Hauptkörper 10 ist als Rohr mit einem Innenraum 12 ausgebildet, welcher die Kupplung 22 derart aufnimmt, dass keine Bauteile in radialer Richtung aus dem Hauptkörper 10 hinausstehen.

Die Kupplung 22 umfasst als notwendige Komponenten eine Ausrückstange 23 mit einem einstückig, integral daran angeformten Drehmomentaufnahmeabschnitt 24 sowie den in der kraftschlüssigen Verbindungsposition damit zusammenwirkenden Drehmomentübertragungsbereich 25.

Die Ausrückstange 23 greift drehfest an dem Verbindungselement 21 an und reicht koaxial in den Innenraum 12 des ersten Endes 20 hinein. In dem Innenraum 12 ist die Ausrückstange 23 abschnittsweise mit einem Stützkolben 27 ausgebildet, der in Richtung der Innenwandung des ersten Endes 20 des Hauptkörpers 10 gegenüber der Ausrückstange 23 radial vorsteht. Der Stützkolben 27 weist einen Außendurchmesser auf, der annähernd dem Innendurchmesser des Innenraumes 12 entspricht und dadurch der Ausrückstange 23 bei einer Bewegung in axialer Richtung x eine seitliche Führung verleiht.

An dem in das erste Ende 20 eingesetzten Endabschnitt der Ausrückstange 23 greift das Kraftübertragungsmittel 11 an und bewegt die Ausrückstange 23 je nach Position des Stellelementes 32 in seiner axialen Richtung x. Das Kraftübertragungsmittel 11 umfasst vorzugsweise einen Bowdenzug, dessen Drahtseil 11a an der Ausrückstange 23 angreift und durch einen in einer inneren Stützwand 14a des Hauptkörpers 10 angeordneten Durchbruch 15 hindurchgeführt ist. Die druckfeste Hülle 11b des Bowdenzugs stützt sich an der inneren Stützwand 14a rings um den Durchbruch 15 ab.

Der Drehmomentaufnahmeabschnitt 24 der Ausrückstange 23 ist gemäß Fig. 2 in der geöffneten Trennposition der Kupplung 22 axial versetzt zu einem komplementär am ersten Ende 20 ausgebildeten Drehmomentübertragungsbereich 25 ausgerichtet. Der Drehmomentaufnahmeabschnitt 24 und der Drehmomentübertragungsbereich 25 können insbesondere aus einem mehreckigen, sternförmigen oder ovalen Profil ausgeformt sein, welches sobald der Drehmomentaufnahmeabschnitt 24 und der Drehmomentübertragungsbereich 25 in axialer Richtung x verschoben und in Wirkeingriff gelangen, eine formschlüssige Verbindung bildet.

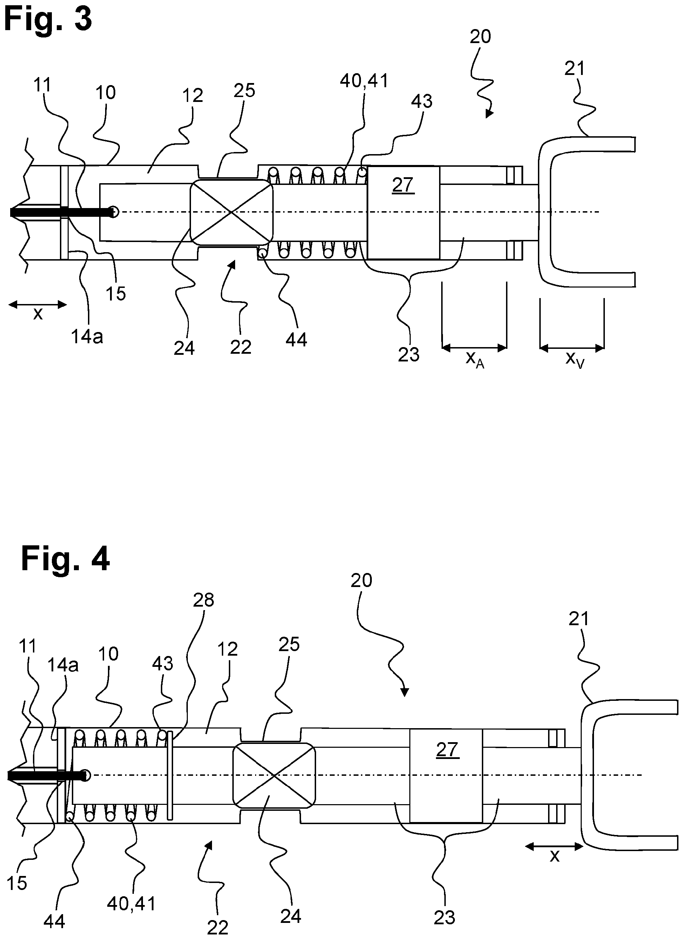

In der geöffneten Trennposition der Kupplung 22 steht der Drehmomentaufnahmeabschnitt 24 in der Bildebene rechts neben dem Drehmomentübertragungsbereich 25, wird zum Erreichen einer kraftschlüssigen Verbindungsposition durch eine von dem Kraftübertragungsmittel 11 auf die Ausrückstange 23 aufgebrachten Zugkraft nach links bewegt und gelangt dadurch in den Drehmomentübertragungsbereich 25, wie besonders gut in der Fig. 3 zu erkennen ist.

Der Drehmomentübertragungsbereich 25 ist ortsfest an dem ersten Ende 20 des Hauptkörpers 10 insbesondere durch Formpressen ausgebildet.

Ohne Vorliegen einer von dem Stellelement 32 auf das Kraftübertragungsmittel 11 übertragenden Zugkraft, drückt ein Federelement 40, das in der Ausführungsform der Fig. 2 und Fig. 3 als Druckfederelement 41 ausgebildet ist, die Ausrückstange 23 in der Bildebene nach rechts, so dass sich die Kupplung 22 in einer geöffneten Trennposition befindet und bei einer Rotation der Handkurbel 1 kein Drehmoment auf das Verbindungselement 21 übertragen wird.

Das Federelement 40 stützt sich mit seinem Endabschnitt 43 an einem ortsfesten Abschnitt der Ausrückstange 23 ab; in dem gezeigten Ausführungsbeispiel an einer Stirnseite des Stützkolbens 27. Mit seinem gegenüberliegenden Endabschnitt 44 liegt das Federelement 40 an einem ortsfesten Abschnitt des ersten Endes 20 von Hauptkörper 10 an; in dem gezeigten Ausführungsbeispiel an einer Stirnseite eines durchmesserkleineren Querschnitts 26 des Drehmomentübertragungsbereiches 25 innerhalb des Innenraums 12. Das Federelement 40 der Ausführungsform gemäß Fig. 2 und Fig. 3 ist in einen Ringraum zwischen Ausrückstange 23 und Innenwandung des ersten Endes 20 eingesetzt und umgibt die Ausrückstange 23 koaxial. Das Federelement 40 ist hinsichtlich seiner axialen Länge und seiner Federkonstante so beschaffen, dass ohne äußere Krafteinwirkung des Stellelementes 32 allein durch das Federelement 40 der Drehmomentaufnahmeabschnitt 24 in axialer Richtung aus dem Drehmomentübertragungsbereich 25 hinausgedrückt ist.

Die Fig. 3 zeigt die kraftschlüssige Verbindungsposition der Kupplung 22, in welcher der Drehmomentaufnahmeabschnitt 24 der Ausrückstange 23 von dem Kraftübertragungsmittel 11 in den freien Querschnitt 26 des Drehmomentübertragungsbereiches 25 gegen die Federkraft des Federelementes 40 hineingezogen ist. Die Ausrückstange 23 ist dabei um den Verfahrweg x_{A} in das ersten Ende 20 des Hauptkörpers 10 hineingewandert und hat dabei das fest daran ausgebildete Verbindungselement 21 um den dem Betrag nach selben Verfahrweg xv mitgenommen. Die kraftschlüssige Verbindungsposition der Kupplung 22 bleibt solange aufrechterhalten, wie der Bediener das am zweiten Ende 30 des Hauptkörpers 10 angeordnete Stellelement 32 betätigt und über das Kraftübertragungsmittel 11 eine Zugkraft auf die Ausrückstange 23 aufbringt, die größer ist als die Federkraft des Federelementes 40. Sollte der Bediener entgegen des Sicherheitshinweises die Handkurbel 1 und somit auch das Stellelement 32 während der Betätigung loslassen, zieht das Federelement 40 die Ausrückstange 23 und mit ihr den Drehmomentaufnahmeabschnitt 24 aus dem Drehmomentübertragungsbereich 25 heraus und bringt die Kupplung 22 automatisch in eine geöffnete Trennposition, in welcher kein Drehmoment mehr auf die Eingangswelle 51 der Stützwinde 50 übertragen wird.

In der Fig. 4 ist eine alternative Ausführungsform gezeigt, bei welcher das Federelement 40 ebenfalls als Druckfederelement 41 ausgebildet ist und in einem Abschnitt des ersten Endes 20, von dem Verbindungselement 21 aus gesehen jenseits des Drehmomentübertragungsbereiches 25, angeordnet ist. Das Federelement 40 stützt sich hier mit seinem Endabschnitt 43 an einem ortsfest an der Ausrückstange 23 ausgebildeten Stützring 28 und mit seinem gegenüberliegenden Endabschnitt 44 an der ortsfest im ersten Ende 20 des Hauptkörpers 10 angeordneten inneren Stützwand 14a ab.

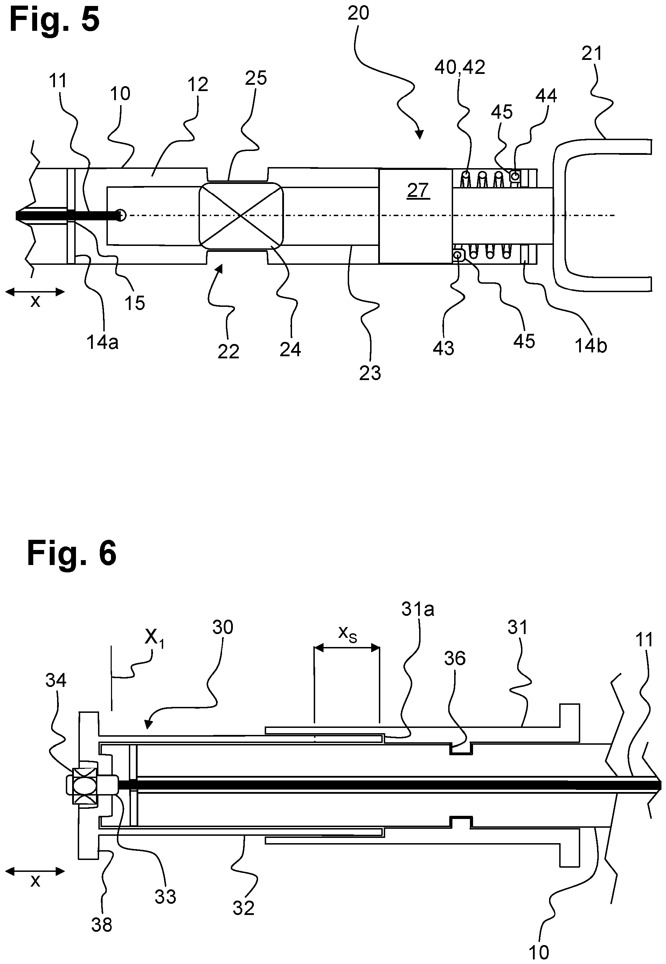

In der Fig. 5 ist ein weiteres Ausführungsbeispiel mit einem Federelement 40 in Form eines Zugfederelementes 42 dargestellt. Das Zugfederelement 42 wird durch Betätigung des Kraftübertragungsmittels 11 gedehnt und erlaubt bei Anhaltender Zugkraft eine Verschiebung des Drehmomentaufnahmeabschnittes 24 der Ausrückstange 23 bis in den Drehmomentübertragungsbereich 25 hinein. Ohne eine von dem Kraftübertragungsmittel 11 aufgebrachte Zugkraft wird die Ausrückstange 23 zusammen mit dem Drehmomentaufnahmeabschnitt 24 aufgrund der Rückstellkraft des Zugfederelementes 42 in axialer Richtung x des Verbindungselementes 21 bewegt und aus dem Wirkeingriff mit dem Drehmomentübertragungsbereich 25 gelöst.

Das Zugfederelement 42 ist zwischen einer an dem freien Ende des ersten Endes 20 angeformten äußeren Stützwand 14b und der Stirnseite des Stützkolbens 27 angeordnet und jeweils mittels eines Zugfederbefestigungsmittels 45 sowohl an dem Stützkolben 27 als auch an der äußeren Stützwand 14b festgelegt. Das Zugfederelement 42 befindet sich in einem Ringraum zwischen der Innenwandung des ersten Endes 20 und der Ausrückstange 23 und umgibt die Ausrückstange 23 vorzugsweise koaxial.

Die Fig. 6 zeigt einen vergrößerten Querschnitt des zweiten Endes 30 des Hauptkörpers 10, an welchem die Kurbelhülse 31 drehbar gelagert ist. In axialer Richtung x wird eine Verschiebung der Kurbelhülse 31 gegenüber dem zweiten Ende 30 mittels eines Axiallagers 36 abgefangen.

Der Hauptkörper 10 durchsetzt die Kurbelhülse 31 vollständig und trägt überdies, vorzugsweise ebenfalls drehbar gelagert, das Stellelement 32. Die Fig. 6 bildet das am zweiten Ende 30 angeordnete Stellelement 32 bei geöffneter Trennposition der am ersten Ende 20 angeordneten Kupplung 22 ab.

Das Stellelement 32 ist als Stellhülse ausgebildet und ragt in axialer Richtung in die Kurbelhülse 31 hinein, die hierfür einen erweiterten Innendurchmesser 31a aufweist. Das Stellelement 32 ist maximal in den erweiterten Innendurchmesser 31a eingetaucht. In dem Abschnitt des erweiterten Innendurchmessers 31a übergreift die Kurbelhülse 31 die Stellhülse 32 in radialer Richtung. Dieser übergreifende Abschnitt ist in axialer Richtung x größer gewählt als ein Verfahrweg xs des Stellelementes 32, welcher wiederum dem am ersten Ende 20 ausgeführten Verfahrweg x_{A} der Ausrückstange 23 und dem Verfahrweg xv des Verbindungselementes 21 entspricht. Hierdurch ist sichergestellt, dass das Stellelement 32 unabhängig von seiner in axialer Richtung x variablen Position stets von der in axialer Richtung x ortsfest gehaltenen Kurbelhülse 32 übergriffen und in radialer Richtung geführt ist.

Das Kraftübertragungsmittel 11 ist in einem Anschlagpunkt 33 an dem Stellelement 32 befestigt, wobei sich der Anschlagpunkt 33 in einer nahen Position X₁ zu dem zweiten Ende 30 befindet. Der Anschlagpunkt 33 kann in axialer Richtung x mittels einer Justiervorrichtung 34 verstellbar sein, so dass eine Vorspannung des Kraftübertragungsmittels 11 einstellbar ist. Die Vorspannung des Kraftübertragungselementes 11 sollte so gewählt sein, dass das unbetätigte Stellelement 32 spielfrei gegen den erweiterten Innendurchmesser 31a der Kurbelhülse 31 gezogen ist. Die Kurbelhülse 31 bildet aufgrund ihres Axiallagers 36 ein Widerlager für das Stellelement 32.

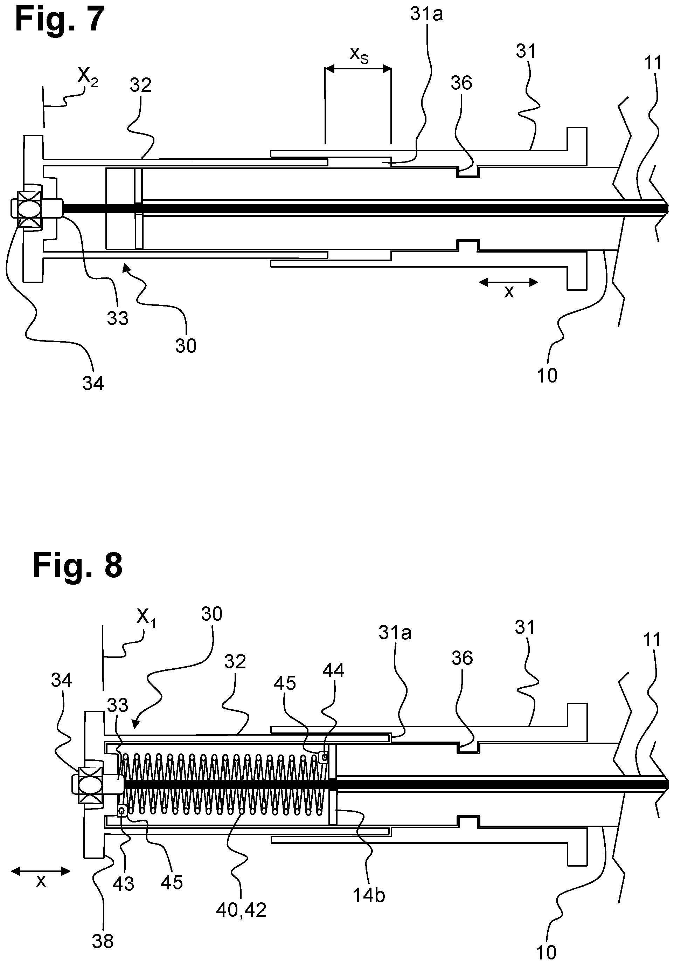

In der Fig. 7 ist das Stellelement 32 in der Bildebene nach links um den Verfahrweg xs herausbewegt und dort gehalten, so dass sich der Anschlagpunkt 33 des Kraftübertragungsmittels 11 in einer beabstandeten Position X₂ zu dem zweiten Ende 30 befindet. Das Stellelement 32 hat dadurch den am ersten Ende 20 befindliche Drehmomentaufnahmeabschnitt 24 in Wirkeingriff mit dem Drehmomentübertragungsbereich 25 gebracht.

Die Fig. 8 zeigt eine weitere Ausführungsform, bei welcher das Federelement 40 in dem Bereich des zweiten Endes 30 des Hauptkörpers 10 angeordnet ist. Bei dieser Ausführungsform kann, soweit ein schubbelastbares Kraftübertragungsmittel 11 eingesetzt ist, auf ein Federelement 40 im Bereich des ersten Endes 20 verzichtet werden.

Das Federelement 40 gemäß der Fig. 8 ist als Zugfederelement 42 beansprucht und mit seinem Endabschnitt 43 an dem zweiten Ende 30 des Hauptkörpers 10, vorzugsweise an einer äußeren Stützwand 14b, und mit seinem gegenüberliegenden Endabschnitt 44 an dem Stellelement 32 jeweils mittels eines Zugfederbefestigungsmittels 45 festgelegt und durchläuft dabei konzentrisch das Stellelement 32. Das Zugfederelement 42 hat das Stellelement 32 soweit wie möglich an das zweite Ende 30 herangezogen, so dass der Anschlagpunkt 33 des Kraftübertragungsmittels 11 eine nahe Position X₁ zu dem zweiten Ende 30 des Hauptkörpers 10 eingenommen hat.

Die dem zweiten Ende 30 zugewandte Seite des Stellelementes 32 füllt vollständig den erweiterten Innendurchmesser 31a aus und stützt sich in diesem Bereich in axialer Richtung x an der Kurbelhülse 31 ab. Das Zugfederelement 42 ist über seine gesamte Erstreckung von dem als Stellhülse ausgebildeten Stellelement 32 aufgenommen.

In den vorstehend beschriebenen Ausführungsformen betreffend das zweite Ende 30 gemäß der Fig. 6 bis Fig. 8 ist das Stellelement 32 stets an seiner dem zweiten Ende 30 abgewandten Seite mit einem vorzugweise in Umfangrichtung geschlossenen Kragen 38 ausgebildet, welcher ein Abrutschen der Hand des Bedieners in axialer Richtung x verhindern soll.

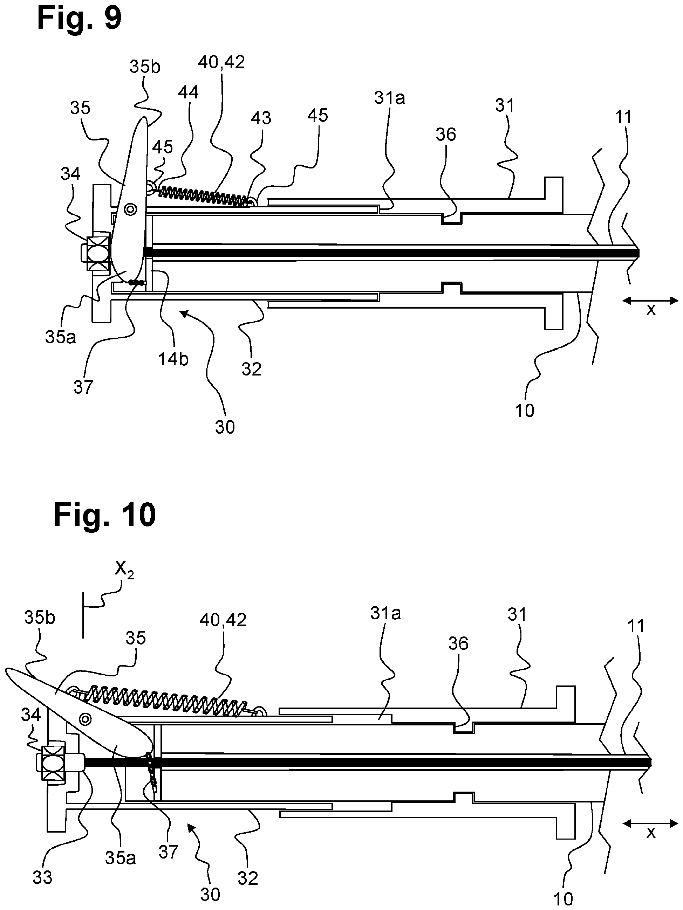

Eine noch komfortablere Bedienung lässt sich mittels eines an dem Stellelement 32 schwenkbar gelagerten Hebels 35 gemäß der in Fig. 9 und Fig. 10 dargestellten Ausführungsform erzielen. Der schwenkbare Hebel 35 weist einen Lastarm 35a auf, welcher unabhängig von seiner Lage stets in den Innenraum des als Stellhülse ausgebildeten Stellelementes 32 hineinreicht und dort dem zweiten Ende 30 des Hauptkörpers 10, insbesondere einer dort senkrecht zur axialen Richtung x verlaufenden äußeren Stützwand 14b, gegenübersteht.

Die Fig. 9 zeigt eine geöffnete Trennposition der am ersten Endes 20 angeordneten Kupplung 22 mit einem möglichst nah an dem zweiten Ende 30 positionierten Stellelement 32. Das Stellelement 32 ist auch bei dieser Ausführungsform vollständig in den erweiterten Innendurchmesser 31a der Kurbelhülse 32 eingetaucht. Ein Kraftarm 35b des Hebels 35 steht bezüglich des Stellelement 32 in dessen radialer Richtung vor und lässt sich in dieser Position besonders gut von einem Bediener ergreifen. Ein als Zugfederelement 42 ausgebildetes Federelement 40 greift mit seinem Endabschnitt 43 mittels eines Zugfederbefestigungsmittels 45 an dem Stellelement 32 und mit seinem gegenüberliegenden Endabschnitt 44 mittels eines Zugfederbefestigungsmittels 45 an dem Kraftarm 35b des Hebels 35 an.

Durch eine Schwenkbewegung des Kraftarmes 35b in eine von der Kurbelhülse 31 abgewandte Richtung drückt der Lastarm 35a gegen das zweite Ende 30 und schiebt entsprechend Fig. 10 das gesamte Stellelement 32 von dem zweiten Ende 30 weg. Nach Erreichen der beabstandeten Position X₂ des Anschlagpunktes 33 zu dem zweiten Ende 30 ist an dem ersten Ende 20 die Kupplung 22 aufgrund der von dem Kraftübertragungsmittel 11 übertragenden Kraft des Bedieners in eine kraftschlüssige Verbindungsposition geschaltet. Das Zugfederelement 42 ist jedoch lediglich für die Dauer einer von dem Bediener aufgebrachten Kraft gespannt.

Sobald der Bediener die Handkurbel 1 und damit auch das Stellelement 32 loslässt, zieht das Zugfederelement 42 den Hebel 35 in die Ausgangslage entsprechend Fig. 9 zurück. Aufgrund der Zugkräfte übertragenden Anbindung des Lastarmes 35a an das zweite Ende 30 mittels des Lastarmverbindungsmittels 37, wandert auch das Stellelement 32 in axialer Richtung x solange zurück, bis ein Anschlag des Stellelementes 32 innerhalb des erweiterten Innendurchmessers 31a erreicht ist. In dieser Position ist die Kupplung 22 am ersten Ende 20 des Hauptkörpers 10 geschlossen.

### Bezugszeichenliste

- 1: Handkurbel

- 10: Hauptkörper
- 11: Kraftübertragungsmittel
- 11a: Drahtseil
- 11b: Hülle
- 12: Innenraum Hauptkörper
- 13: Mittelteil Hauptkörper
- 14a: innere Stützwand
- 14b: äußere Stützwand
- 15: Durchbruch

- 20: erstes Ende Hauptkörper
- 21: Verbindungselement
- 21b: Verbindungsbolzen
- 22: Kupplung
- 23: Ausrückstange
- 24: Drehmomentaufnahmeabschnitt
- 25: Drehmomentübertragungsbereich
- 26: Querschnitt Drehmomentübertragungsbereich
- 27: Stützkolben Ausrückstange
- 28: Stützring Ausrichtstange

- 30: zweites Ende Hauptkörper
- 31: Kurbelhülse
- 31a: erweiterter Innendurchmesser
- 32: Stellelement/Stellhülse
- 33: Anschlagpunkt Kraftübertragungsmittel
- 34: Justiervorrichtung
- 35: Hebel
- 35a: Lastarm Hebel
- 35b: Kraftarm Hebel
- 36: Axiallager Kurbelhülse
- 37: Lastarmverbindungsmittel
- 38: Kragen Stellelement

- 40: Federelement
- 41: Druckfederelement
- 42: Zugfederelement
- 43: Endabschnitt
- 44: gegenüberliegender Endabschnitt
- 45: Zugfederbefestigungsmittel

- 50: Stützwinde
- 51: Eingangswelle
- 52: Verbindungswelle
- 53: Außenhülse
- 54: Innenhülse
- 55: Stützfuß
- 56: Anschraubplatte

- x: axiale Richtung

- x_{A}: Verfahrweg Ausrückstange
- xs: Verfahrweg Stellelement
- xv: Verfahrweg Verbindungselement

- X₁: nahe Position Anschlagpunkt/zweites Ende
- X₂: beabstandete Position Anschlagpunkt/zweites Ende

## Patentansprüche

1. Handkurbel (1) für eine Stützwinde (50), wobei die Handkurbel einen Hauptkörper (10) aufweist, an dessen ersten Ende (20) ein Verbindungselement (21) zur Befestigung der Handkurbel an einer Eingangswelle (51) der Stützwinde (50) angreift und dessen gegenüberliegendes, zweites Ende (30) zum Drehen der Handkurbel (1) ausgebildet ist,
**dadurch gekennzeichnet,**
**dass** im Kraftfluss zwischen dem ersten Ende (20) des
Hauptkörpers (10) und dem Verbindungselement (21) eine Kupplung (22) angeordnet ist, die in einer geöffneten Trennposition gehalten und durch Betätigung eines an dem zweiten Ende (30) angeordneten Stellelementes (32) in eine kraftschlüssige Verbindungsposition bewegt ist.

2. Handkurbel (1) nach Anspruch 1, **dadurch gekennzeichnet, dass** die Kupplung (22) und das Stellelement (32) über ein Kraftübertragungsmittel (11) miteinander verbunden sind.

3. Handkurbel (1) nach Anspruch 2, **dadurch gekennzeichnet, dass** die Kupplung (22) eine Ausrückstange (23) aufweist, an welcher das Kraftübertragungsmittel (11) befestigt ist.

4. Handkurbel (1) nach Anspruch 3, **dadurch gekennzeichnet, dass** die Ausrückstange (23) drehfest an dem Verbindungselement (21) angreift und mit einem Drehmomentaufnahmeabschnitt (24) ausgebildet ist.

5. Handkurbel (1) nach einem der Ansprüche 1 bis 4, **dadurch gekennzeichnet, dass** die Kupplung (22) einen Drehmomentübertragungsbereich (25) aufweist, der ortsfest an dem ersten Ende (20) des Hauptkörpers (10) angeordnet ist.

6. Handkurbel (1) nach Anspruch 4 und 5, **dadurch gekennzeichnet, dass** die Ausrückstange (23) bezüglich des Hauptkörpers (10) in axialer Richtung (x) verschiebbar geführt ist und bei Betätigung des Stellelementes (32) der Drehmomentaufnahmeabschnitt (24) in Wirkeingriff mit dem Drehmomentübertragungsbereich (25) gelangt.

7. Handkurbel (1) nach Anspruch 6, **dadurch gekennzeichnet, dass** der Drehmomentübertragungsbereich (25) einen komplementär zu dem Drehmomentaufnahmeabschnitt (24) ausgeformten Querschnitt (26) aufweist.

8. Handkurbel (1) nach einem der Ansprüche 1 bis 7, **dadurch gekennzeichnet, dass** die Kupplung (22) von einem Federelement (40) in der geöffneten Trennposition gehalten ist.

9. Handkurbel (1) nach einem der Ansprüche 1 bis 8, **dadurch gekennzeichnet, dass** das Stellelement (32) bezüglich des zweiten Endes (30) des Hauptkörpers (10), insbesondere in axialer Verlängerung des zweiten Endes (30), verschiebbar gelagert ist.

10. Handkurbel (1) nach einem der Ansprüche 2 bis 4, **dadurch gekennzeichnet, dass** das Stellelement (32) einen Anschlagpunkt (33) für das Kraftübertragungsmittel (11) aufweist.

11. Handkurbel (1) nach Anspruch 10, **dadurch gekennzeichnet, dass** der Anschlagpunkt (33) in der geöffneten Trennposition der Kupplung (22) in einer nahen Position (X₁) zu dem zweiten Ende (30) des Hauptkörpers (10) angeordnet ist.

12. Handkurbel (1) nach Anspruch 10 oder 11, **dadurch gekennzeichnet, dass** der Anschlagpunkt (33) in der kraftschlüssigen Verbindungsposition der Kupplung (22) in einer beabstandeten Position (X₂) zu dem zweiten Ende (30) des Hauptkörpers (10) angeordnet ist.

13. Handkurbel (1) nach einem der Ansprüche 10 bis 12, **dadurch gekennzeichnet, dass** der Anschlagpunkt (33) eine Justiervorrichtung (34) zur Längeneinstellung des Kraftübertragungsmittels (11) umfasst.

14. Handkurbel (1) nach einem der Ansprüche 1 bis 13, **dadurch gekennzeichnet, dass** an dem Stellelement (32) oder einer Kurbelhülse (31) ein Hebel (35) schwenkbeweglich gelagert ist, dessen Lastarm (35a) an dem zweiten Ende (30) des Hauptkörpers (10) abgestützt ist.

15. Stützwinde (50) mit einer Eingangswelle (51) und einer Handkurbel (1) nach einem der Ansprüche 1 bis 14, wobei die Stützwinde (50) eine Außenhülse (53) und eine darin teleskopierbar geführte Innenhülse (54) mit einem Endseitig daran ausgebildeten Stützfuß (55) aufweist, und wobei durch Betätigung der Handkurbel (1) in kraftschlüssiger Verbindungsposition der Kupplung (22) die Innenhülse (54) relativ zu der Außenhülse (53) verfahrbar ist.

## Claims

1. A crank handle (1) for a support jack (50), wherein the crank handle has a main body (10) at the first end (20) of which a connection element (21) for the attachment of the crank handle to an input shaft (51) of the support jack (50) engages and the opposite, second end (30) of which is formed in order to rotate the crank handle (1),
**characterised in that**
in the force flow between the first end (20) of the main body (10) and the connection element (21) a coupling (22) is arranged which is held in an open separating position and is moved to a force-fitted connection position by actuation of an actuating element (32) arranged at the second end (30).

2. The crank handle (1) according to claim 1, **characterised in that** the coupling (22) and the actuating element (32) are connected to one another via a force transmission means (11).

3. The crank handle (1) according to claim 2, **characterised in that** the coupling (22) has a disengagement rod (23) on which the force transmission means (11) is attached.

4. The crank handle (1) according to claim 3, **characterised in that** the disengagement rod (23) engages the connection element (21) in a rotationally fixed manner and is formed with a torque receiving portion (24).

5. The crank handle (1) according to any one of claims 1 to 4, **characterised in that** the coupling (22) has a torque transmission region (25) which is arranged at the first end (20) of the main body (10) in a stationary manner.

6. The crank handle (1) according to claim 4 and 5, **characterised in that** the disengagement rod (23) is guided in a slidable manner in the axial direction (x) with regard to the main body (10) and, upon actuation of the actuating element (32), the torque receiving portion (24) comes into operative engagement with the torque transmission region (25).

7. The crank handle (1) according to claim 6, **characterised in that** the torque transmission region (25) has a cross-section (26) which is formed complementary to the torque receiving portion (24).

8. The crank handle (1) according to any one of claims 1 to 7, **characterised in that** the coupling (22) is held in the open separating position by a spring element (40).

9. The crank handle (1) according to any one of claims 1 to 8, **characterised in that** the actuating element (32) is mounted in a displaceable manner with regard to the second end (30) of the main body (10), in particular in an axial extension of the second end (30).

10. The crank handle (1) according to any one of claims 2 to 4, **characterised in that** the actuating element (32) has an abutment point (33) for the force transmission means (11).

11. The crank handle (1) according to claim 10, **characterised in that** the abutment point (33), in the open separating position of the coupling (22), is arranged in a proximal position (X₁) to the second end (30) of the main body (10).

12. The crank handle (1) according to claim 10 or 11, **characterised in that** the abutment point (33), in the force-fitted connection position of the coupling (22), is arranged in a spaced-apart position (X₂) to the second end (30) of the main body (10).

13. The crank handle (1) according to any one of claims 10 to 12, **characterised in that** the abutment point (33) comprises an adjustment device (34) for the length adjustment of the force transmission means (11).

14. The crank handle (1) according to any one of claims 1 to 13, **characterised in that** a lever (35) is pivotally mounted on the actuating element (32) or on a crank sleeve (31), the load arm (35a) of which lever is supported at the second end (30) of the main body (10).

15. A support jack (50) with an input shaft (51) and a crank handle (1) according to any one of claims 1 to 14, wherein the support jack (50) has an outer sleeve (53) and an inner sleeve (54) guided therein in a telescopic manner, with a support foot (55) formed at the end side thereof, and wherein, by actuation of the crank handle (1) in a force-fitted connection position of the coupling (22), the inner sleeve (54) can be moved relative to the outer sleeve (53).

## Revendications

1. Manivelle (1) pour une béquille (50), dans laquelle la manivelle présente un corps principal (10) à la première extrémité (20) duquel un élément de liaison (21) vient en prise pour fixer la manivelle à un arbre d'entrée (51) de la béquille (50) et dont la seconde extrémité (30) opposée est destinée à tourner la manivelle (1),
**caractérisée en ce,**
**qu'**un accouplement (22) est maintenu dans le flux de force entre la première extrémité (20) du corps principal (10) et l'élément de liaison (21), lequel accouplement est dans une position de séparation ouverte et est déplacé par l'actionnement d'un élément de réglage (32) disposé à la seconde extrémité (30) dans une position de liaison de force.

2. Manivelle (1) selon la revendication 1, **caractérisée en ce que** l'accouplement (22) et l'élément de réglage (32) sont reliés l'un à l'autre par un moyen de transmission de force (11).

3. Manivelle (1) selon la revendication 2, **caractérisée en ce que** l'accouplement (22) présente une tige de déclenchement (23) à laquelle est fixé le moyen de transmission de force (11).

4. Manivelle (1) selon la revendication 3, **caractérisée en ce que** la tige de déclenchement (23) met en prise l'élément de liaison (21) de manière fixe en rotation et est conçue avec une section de réception de couple (24).

5. Manivelle (1) selon l'une des revendications 1 à 4, **caractérisée en ce que** l'accouplement (22) présente une zone de transmission de couple (25) qui est disposée de manière fixe sur la première extrémité (20) du corps principal (10).

6. Manivelle (1) selon les revendications 4 et 5, **caractérisée en ce que** la tige de déclenchement (23) est guidée de manière déplaçable dans la direction axiale (x) par rapport au corps principal (10) et, lorsque l'élément de réglage (32) est actionné, la section de réception de couple (24) se retrouve en contact fonctionnel avec la zone de transmission de couple (25).

7. Manivelle (1) selon la revendication 6, **caractérisée en ce que** la zone de transmission de couple (25) présente une section transversale (26) de forme complémentaire à la section de réception de couple (24).

8. Manivelle (1) selon l'une des revendications 1 à 7, **caractérisée en ce que** l'accouplement (22) est maintenu en position ouverte déconnectée par un élément à ressort (40).

9. Manivelle (1) selon l'une des revendications 1 à 8, **caractérisée en ce que** l'élément de réglage (32) est monté de manière mobile par rapport à la seconde extrémité (30) du corps principal (10), en particulier dans le prolongement axial de la seconde extrémité (30).

10. Manivelle (1) selon l'une des revendications 2 à 4, **caractérisée en ce que** l'élément de réglage (32) présente un point d'arrêt (33) pour les moyens de transmission de force (11) .

11. Manivelle (1) selon la revendication 10, **caractérisée en ce que** le point d'arrêt (33) est disposé en position de séparation ouverte de l'accouplement (22) dans une position (X₁) proche de la seconde extrémité (30) du corps principal (10).

12. Manivelle (1) selon la revendication 10 ou 11, **caractérisée en ce que** le point d'arrêt (33) est disposé dans la position de liaison de force de l'accouplement (22) dans une position écartée (X₂) de la seconde extrémité (30) du corps principal (10) .

13. Manivelle (1) selon l'une des revendications 10 à 12, **caractérisée en ce que** le point d'arrêt (33) comprend un dispositif de réglage (34) pour régler la longueur des moyens de transmission de force (11).

14. Manivelle (1) selon l'une des revendications 1 à 13, **caractérisée en ce qu'**un levier (35) est monté de manière pivotante sur l'élément de réglage (32) ou un manchon de manivelle (31), levier dont le bras de charge (35a) est supporté par la seconde extrémité (30) du corps principal (10).

15. Béquille (50) avec un arbre d'entrée (51) et une manivelle (1) selon l'une des revendications 1 à 14, dans laquelle la béquille (50) présente un manchon extérieur (53) et un manchon intérieur (54) guidés de manière télescopique à l'intérieur avec un pied de support formé sur celui-ci à une extrémité (55), et dans laquelle, par l'actionnement de la manivelle (1) dans la position de liaison de force de l'accouplement (22), le manchon intérieur (54) peut être déplacé par rapport au manchon extérieur (53).
